# EUROPEAN PATENT APPLICATION

(11) **EP 0 875 634 A1**
(43) Date of publication of application: **04.11.1998**
(21) Application number: 97201185.2
(22) Date of filing: 23.04.1997
(51) Int. Cl.: E03F 5/02, F16L 47/06

(54) **Device comprising coupling means for attaching a pipe or the like thereto**

(30) Priority: 23.04.1996 NL 1002923
(71) Applicant: Nyloplast Europe B.V., 3295 ZG 's-Gravendeel (NL); ALPHACAN Omniplast GmbH, 35630 Ehringshausen (DE)
(72) Inventor: de Wit, Hartgert, 3355 RA Papendrecht (NL); Nowack, Reinhard, 35630 Ehringshausen (DE)
(74) Representative: Hooiveld, Arjen Jan Winfried

(57) **Abstract**

A device (1) comprising coupling means for attaching a pipe or the like thereto by inserting one end of said pipe into said coupling means, which coupling means include an annular space for receiving a sealing ring (9) surrounding said pipe, which annular space is at least partially enclosed on the outside, characterized in that said coupling means are provided with a pipe portion (8) which forms the outside wall of the sealing ring space and which includes radially inwardly extending parts (10) for bounding the sealing ring space on the side of said space that faces the device (1), which coupling means furthermore include an annular element (12) engaging round said pipe portion and being connected thereto, which bounds the sealing ring space on the side of said space that faces away from the device (1).

## Description

The invention relates to a device comprising coupling means for attaching a pipe or the like thereto by inserting one end of said pipe into said coupling means, which coupling means include an annular space for receiving a sealing ring surrounding said pipe, which annular space is at least partially enclosed on the outside. According to the invention a special embodiment is made in the form of an inspection/repair shaft or pit, in particular for sewage systems.

A device of this kind is generally known. The known inspection/repair shaft or pit comprises one or more connecting sleeves for coupling a standpipe, a pipe or the like to the shaft. Each sleeve comprises a circumferentially provided, outwardly extending annular chamber, which is capable of receiving a sealing ring surrounding said standpipe. One drawback of such a known construction is that the inspection/repair shaft cannot be removed from the mould in question, and cannot be made in one piece, therefore. It will be necessary, therefore, to use welding techniques. It will be apparent that this adds to the production costs of the known inspection/repair shaft or pit.

The object of the invention is generally to provide a device to be made in one-piece comprising coupling means for attaching a standpipe, pipe or the like thereto, and in order to accomplish that objective a device of the kind referred to in the introduction is characterized in that said coupling means are provided with a pipe portion which forms the outside wall of the sealing ring space and which includes radially inwardly extending parts for bounding the sealing ring space on the side of said space that faces the device, which coupling means furthermore include an annular element engaging round said pipe portion and being connected thereto, which bounds the sealing ring space on the side of said space that faces away from the device.

In one embodiment of a device according to the invention the radially inwardly extending portions are at least substantially made up of axially provided ribs, which butt against the end of the standpipe to be inserted into said coupling means. The ribs functions as a "sleeve", therefore.

In another embodiment of the device a ring, which may or may not be detachable, is provided on the ends of the ribs facing away from the device, which ring forms a side wall of the sealing ring space. The ring, which functions as a supporting ring, prevents deformation of the sealing ring when loads are being applied.

In another embodiment of the device according to the invention said annular element is connected to said pipe portion by means of a snap connection. In another special embodiment a screwed connection is used.

In another embodiment of the device according to the invention said annular element comprises a tubular portion at its side remote from the device, which tubular portion surrounds the end of the pipe to be inserted into said coupling means. This is done in order to comply with the regulations concerning the total length of the pipe portion, which frequently differ with each individual country.

The invention furthermore relates to a method for producing said device.

The invention will be explained in more detail with reference to Figures illustrated in a drawing, wherein:
- Figure 1 is a diagrammatic plan view of a device according to the invention; and
- Figure 2 is a cut-away cross-sectional view of the device according to Figure 1.

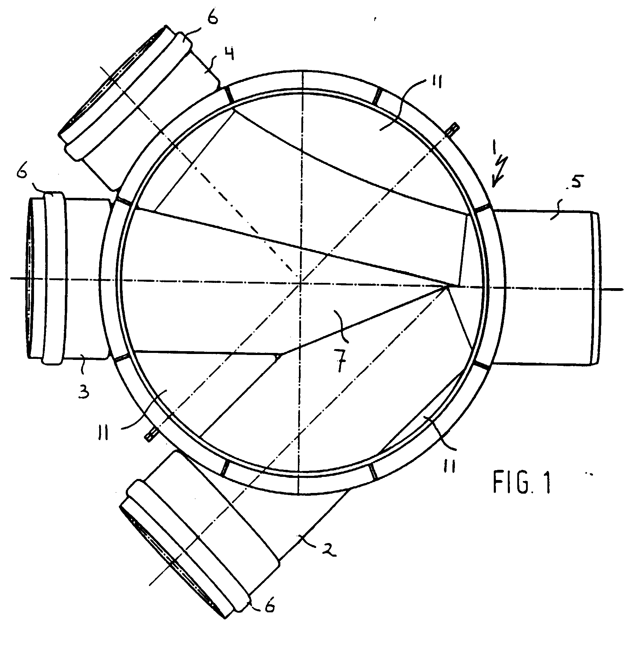

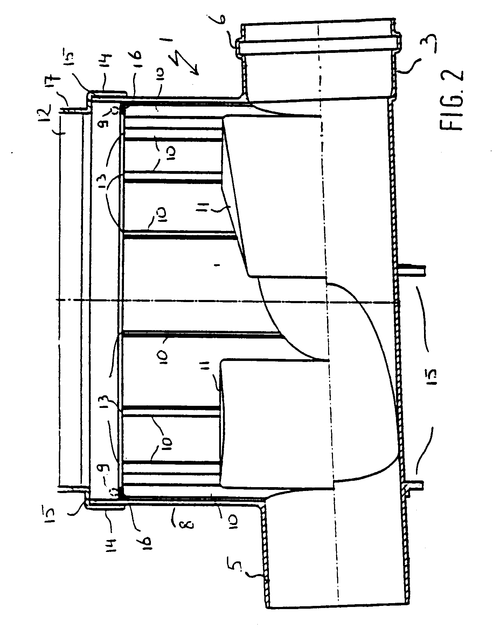

Figures 1 and 2 show a preferred embodiment of the device according to the invention, which forms a shaft portion of an inspection/repair shaft or pit, in particular for sewage systems.

Figure 1 shows a housing 1 comprising three inlets 2, 3, 4 and one outlet 5. Inlets 2, 3, 4 include a connecting sleeve 6, whereby a sealing ring is provided in an outwardly extending annular chamber present therein. The axes of the laterally oriented inlets 2, 4 are offset with respect to each other as regards their intersecting points with the axis of the centrally oriented inlet 3. The bottoms of both inlets 2, 3, 4 and outlet 5 extend identically with respect to the bottom of water channel 7. Moreover, as far as their radius of curvature is concerned, inlets 2, 4 blend into water channel 7 in a manner which benefits the flow. All this results in a laminar flow (instead of a turbulent flow), whereby the flow through water channel 7 meets with the lowest possible hydraulic resistance. In particular because of the aforesaid "asymmetry" of the axes of the lateral inlets 2, 4, turbulence or accumulation of the sewage water to be discharged is prevented (as much as possible).

Figure 2 is a cut-away cross-sectional view of the inspection/repair shaft of Figure 1. After extensive research the Applicants have surprisingly succeeded in providing the upper side of housing 1 with means for connecting a standpipe thereto, in such a manner that housing 1 can preferably be made (in situ) in one piece - that is, without having to use welding techniques - by means of injection moulding techniques. It will be apparent that this makes it possible to mass-produce inspection/repair shafts in an elegant and economically attractive manner. Said forming of the housing in one piece is based on the principle of constructing the part of housing 1 where a standpipe is to be connected in such a manner that housing 1 can be directly removed from the mould in question. According to the invention housing 1 is provided with coupling means in the form of a cylindrical pipe portion 8, which makes up the outside wall of a cylindrical space in which a sealing ring 9 (illustrated in dotted lines) is provided. Pipe portion 8 includes radially inwardly extending ribs 10, which are provided in axial direction on the inner side of said outside wall. When one end of a standpipe to be connected is inserted into pipe portion 8, said ribs 10 will abut against said end. The inner sides of ribs 10 function as the inside diameter of the "sleeve" (standpipe guide), therefore, whilst housing 1 includes internal surfaces 11 (shoulders), against which the pipe to be connected will butt upon being inserted. Surfaces 11 function as a bumper, therefore. The aforesaid ribs 10 bound the sealing ring space on the side of said space that faces housing 1. On the opposite side, that is, the side of the sealing ring space that faces away from housing 1, said space is bounded by an annular element 12. Said element 12 engages round pipe portion 8 and is connected thereto. More in particular this is a factory-made snap connection for single use, which is yet to be explained in more detail hereafter. Preferably a loose intermediate ring 16 is provided on the end 13 of the ribs 10 facing away from housing 1, which ring functions as a supporting ring for sealing ring 9. Because of this arrangement sealing ring 9 will hardly deform, if at all, when loads are being applied. In a special embodiment said annular element is provided with an outwardly extending tubular portion 17 at its side facing away from housing 1. Said part surrounds the end of a standpipe to be connected, so that the regulations concerning the total length of pipe portion 8, which frequently differ with each individual country, are complied with. As already said before, annular element 12 is attached to pipe portion 8 by means of a snap connection. In a preferred embodiment element 12 is to this end provided with inwardly extending cams at its outer edges 14, which cams co-operate with correspondingly shaped recesses in the outer ends 15 of pipe portion 8. A mechanical reversal is also possible in this connection, of course. Finally it is noted that housing 1 comprises legs 15 of different lengths, which extend from the bottom of said housing and which are supported on a flat base. On the one hand said legs ensure that the whole is arranged at an angle of approximately 2.5° , in order to advance the outflow of sewage water, and on the other hand they ensure a proper nesting of stacked-together housings 1 during transport.

Finally the following is noted. Housing 1 of Figure 2 is at its bottom side provided with connecting sleeves 6 according to prior art, so that the upper side of housing 1 is made in one piece. Of course it is possible to provide all pipe connections of housing 1 with coupling means according to the invention, so that housing 1 is in its entirety made in one piece.

Preferably the inspection/repair shaft according to the invention is made of a thermoplastic plastic, in particular PVC (polyvinyl chloride), PE (polyethylene) or PP (polypropylene).

## Claims

1. A device (1) comprising coupling means for attaching a pipe or the like thereto by inserting one end of said pipe into said coupling means, which coupling means include an annular space for receiving a sealing ring (9) surrounding said pipe, which annular space is at least partially enclosed on the outside, characterized in that said coupling means are provided with a pipe portion (8) which forms the outside wall of the sealing ring space and which includes radially inwardly extending parts (10) for bounding the sealing ring space on the side of said space that faces the device (1), which coupling means furthermore include an annular element (12) engaging round said pipe portion (8) and being connected thereto, which bounds the sealing ring space on the side of said space that faces away from the device (1).

2. A device (1) according to claim 1, wherein said radially inwardly extending portions (10) are at least substantially made up of axially provided ribs, which butt against the end of the pipe to be inserted into said coupling means.

3. A device (1) according to claim 2, wherein a ring (16), which may or may not be detachable, is provided on the ends of the ribs facing away from the device (1), which ring forms a side wall of said sealing ring space.

4. A device device (1) according to any one of the preceding claims 1 - 3, wherein said annular element (12) is connected to said pipe portion (8) by means of a snap connection.

5. A device (1) according to any one of the preceding claims 1 - 4, wherein said annular element (12) comprises a tubular portion (17) at its side remote from the device, which tubular portion surrounds the end of the pipe to be inserted into said coupling means.

6. A device (1) according to any one of the preceding claims 1 - 5, wherein at least one internal shoulder (11) is provided, against which the end of the pipe to be inserted into said coupling means is supported.

7. A device (1) according to any one of the preceding claims 1 - 6, wherein said device (1) is made of a thermoplastic plastic, in particular PVC, PE or PP.

8. A method for producing a device (1) comprising coupling means for attaching a pipe or the like thereto by inserting one end of said pipe into said coupling means, which coupling means include an annular space for receiving a sealing ring (9) surrounding said pipe, which annular space is at least partially enclosed on the outside, according to any one of the preceding claims 1 - 7, characterized in that said coupling means are provided with a pipe portion (8) which forms the outside wall of the sealing ring space and which includes radially inwardly extending parts (10) for bounding the sealing ring space on the side of said space that faces the device (1), and that said coupling means are furthermore provided with an annular element (12) engaging round said pipe portion (8) and being connected thereto, which bounds the sealing ring space on the side of said space that faces away from the device (1).
